# EUROPÄISCHE PATENTSCHRIFT

(11) **EP 0 716 026 B1**
(45) Veröffentlichungstag und Bekanntmachung des Hinweises auf die Patenterteilung: **08.09.1999**
(21) Anmeldenummer: 95116399.7
(22) Anmeldetag: 18.10.1995
(51) Int. Cl.: B65D 5/74

(54) **Quaderförmige Flachgiebelverbundpackung mit Ausgiesselement und Verfahren zur Herstellung einer solchen Flachgiebelverbundpackung**
Parallelepipedical flat-gable-top container including a pouring spout and method of producing such a flat-gable-top container
Récipient parallèlepipédique avec un sommet en forme de toit plat comprenant un bec-verseur et procédé de production d'un tel récipient

(30) Priorität: 07.12.1994 DE 4443556
(43) Veröffentlichungstag der Anmeldung: 12.06.1996
(73) Patentinhaber: SIG Combibloc GmbH, 52441 Linnich (DE)
(72) Erfinder: Dammers, Mathias, D-52441 Linnich (DE)
(74) Vertreter: Cohausz & Florack

(56) Entgegenhaltungen:
- EP-A- 0 558 946
- DE-A- 3 808 303
- DE-A- 4 409 947
- GB-A- 2 241 225
- US-A- 4 819 829
- US-A- 5 110 040

## Beschreibung

Die Erfindung betrifft eine quaderförmige Flachgiebelverbundpackung mit Ausgießelement, insbesondere eine Ohrenpackung mit Mittel- oder Ecknaht, sowie ein Verfahren zur Herstellung einer solchen quaderförmigen Flachgiebelverbundpackung.

Quaderförmige Flachgiebelverbundpackungen sind in vielfacher Ausfertigung bekannt. Sie finden vornehmlich auf dem Gebiet der Flüssigkeitsverpackungen in Verbindung mit Kalt-, Kalt-Steril-, Heiß- und aseptischer Füllung Verwendung. Diese Packungen lassen sich in der Regel nach einmaligem Öffnen nicht wieder verschließen. Es ist daher bei Flachgiebelverbundverpackungen der vorbeschriebenen Art bereits vorgeschlagen worden, im Packungsgiebel ein Ausgießelement anzuordnen (DE 38 08 303 A1). Dort besteht die Flachgiebelverbundpackung aus einem Verbund mit einer Trägerschicht aus Karton, einer zwischen zwei Haftvermittlerschichten einkaschierten Sauerstoffsperrschicht und einer beidseitigen Kunststoffbeschichtung aus Polyethylen (PE). Dabei ist im Bereich der Kartonschicht und äußeren PE-Schicht eine umlaufende Öffnungsfläche zur Schwächung des Giebelmaterials vorgesehen, in die zum Öffnen der Packung ein mit einem Verschlußdeckel einstückig verbundener und der Form der umlaufenden Öffnungsfläche entsprechender Tubus in das Packungsmaterial hineingedrückt wird. Zum besseren Durchtrennen der geschwächten Öffnungsfläche ist dazu die Unterkante des Tubus mit geeigneten mechanischen Öffnungsmitteln wie Schneiden od. dgl. vorgesehen.

Die zuvor beschriebene Flachgiebelverbundpackung ist jedoch in mehreren Punkten verbesserungswürdig. Es ist klar, daß zu Zwecken der Lagerung und des Transports gewährleistet sein muß, daß der mit dem Verschlußdeckel verbundene Tubus nicht vorzeitig, also vor dem erstmaligen Gebrauch in der Packung in das Material eindringen darf. Dazu ist beim gattungsbildenden Stand der Technik eine den Verschlußdeckel und den die Öffnungsfläche umlaufenden Flansch des Ausgießelementes in vorbestimmtem Abstand zueinander zu fixierende Lasche vorgesehen. Erst nach dem Entfernen dieser Lasche ist es möglich, den Öffnungstubus durch Eindrücken des Verschlußdeckels in das Packungsverbundmaterial zu stoßen. Dies hat wiederum zur Folge, daß eine gewisse Mindesthöhe des bekannten Ausgießelementes zwingend vorgegeben ist. Dies ist jedoch wegen der bei Flachgiebelverbundpackungen geforderten Stapelbarkeit von Nachteil.

Des weiteren besteht die Möglichkeit, daß das vom Tubus herausgetrennte Packungsstück vollständig vom übrigen Packungsverbund gelöst wird und somit in die Flüssigkeit gelangt. Dies ist jedoch nicht hygienisch und kann außerdem zu Problemen beim Ausgießen führen, wenn das freie in der Flüssigkeit schwimmende Packungsverbundstück die Ausgießöffnung ganz oder teilweise "verstopft" oder gar durch die Ausgießöffnung in das Trinkgefäß gelangt.

Aus der US-PS 4 819 829 ist ein Ausgießelement zum Wiederverschließen von Verpackungscontainern für ausgießbare Materialien bekannt, bei dem ein Schieber so in einer Gleitbahn geführt wird, daß er eine Packungsöffnung freigeben und wieder verschließen kann. Diese Art des Verschlusses kann aber die hohen Ansprüche, die an die für den Transport notwendige Dichtheit für Verpackungen von Kalt-Steril- oder aseptischen Füllungen gestellt werden, nicht erfüllen.

Die DE-A 38 08 303 beschreibt eine quaderförmige Flachgiebelpackung mit einer im Packungsgiebel vorbereiteten durchstoßbaren oder entlang einer geschlossenen Trennlinie durchtrennbaren Fläche, die nach dem Durchstoßen bzw. Durchtrennen ein Gießloch bildet. Mit der Außenoberfläche dieser quaderförmigen Flachgiebelpackung ist ein Kunststoff-Ausgußkörper verbunden, dessen Flansch die Trennlinie bzw. das Gießloch umgibt. An das als Gießtülle ausgebildete Kunststoff-Ausgießelement ist ein Verschlußklappendeckel angelenkt, der mit einem mit Schneiden versehenen Tubus auf der dem Gießloch zugewandten Stirnseite versehen ist.

Die EP-A 0 558 946 offenbart die Ausgestaltung einer Öffnung für eine Flachgiebelpackung, bei der ein in die Flachgiebelpackung eingestanztes Loch auf der Packungsoberfläche mit einem Folienstreifen versiegelt wird. Anschließend wird auf diesen Folienstreifen ein Ausgießelement aufgesetzt und mit der Packung verbunden. Das Ausgießelement weist einen Verschlußdeckel auf, der mittels einer Lasche klappbar an dem Ausgießelement angelenkt ist.

Aus der GB-A 2 241 225 ist ein zylinderförmiges Ausgießelement für eine Giebelpackung bekannt. Das Ausgießelement weist einen Flansch auf, mittels dem das Ausgießelement so von der Innenseite an den Giebel der Giebelpackung befestigt wird, daß es ein vorgestanztes Loch in diesem Giebel verschließt. Das zylinderförmige Ausgießelement wird durch einen aufschraubbaren Deckel verschlossen.

Davon ausgehend liegt der vorliegenden Erfindung die Aufgabe zugrunde, eine eingangs genannte und zuvor näher beschriebene quaderförmige Flachgiebelverbundpackung mit Ausgießelement sowie ein Verfahren zur Herstellung einer solchen Flachgiebelverbundpackung so auszugestalten und weiterzubilden, daß die Gesamthöhe der mit dem Ausgießelement versehenen Flachgiebelverbundpackung verringert wird und ein einwandfreies Öffnen der Packung und Ausgießen des Inhaltes zuverlässig gewährleistet ist. Darüber hinaus ist erwünscht, daß ein unbeabsichtigtes Abreißen des Ausgießelementes von der Packungsoberfläche zuverlässig verhindert wird.

Hinsichtlich der Flachgiebelverbundpackung ist die Aufgabe dadurch gelöst, daß das Ausgießelement einen umlaufenden Flansch aufweist, der an der Packungsinnenseite anliegt, daß im Packungsgiebel eine Öffnung zur Aufnahme des Ausgießelementes vorgesehen ist, daß das in der Öffnung angeordnete Ausgießelement in seinem Inneren eine umlaufende Schwächungslinie aufweist und daß das Ausgießelement innerhalb der Schwächungslinie ein Verschlußteil mit einer daran einstückig angelenkten Öffnungshilfe zum Herausziehen des von der Schwächungslinie umgebenen Verschlußteiles des Ausgießelementes aufweist.

Zum Erreichen einer optimalen Dichtigkeit ist vorgesehen, daß das Ausgießelement wenigstens in seinem zum Packungsinneren weisenden Bereich die gleichen Barriereeigenschaften aufweist wie das verwendete Verbundmaterial. Dabei kann dieser Bereich mit einer Barriereschicht beschichtet sein oder aber das Ausgießelement ist selbst in diesem Bereich mehrlagig ausgebildet.

Zum Erreichen einer optimalen Dichtigkeit der Verbundpackung und Haltbarkeit ihres Inhaltes sieht eine bevorzugte Ausgestaltung der Erfindung vor, daß das Ausgießelement einen wiederverschließbaren Verschlußdeckel aufweist.

Nach einer Ausgestaltung der Erfindung weist das Ausgießelement einen wiederverschließbaren Verschlußdeckel auf. Dabei ist es möglich, daß der Verschlußdeckel auf dem Ausgießelement verschiebbar angeordnet ist, es ist jedoch auch denkbar, daß der Verschlußdeckel als einstückig mit dem Ausgießelement verbundener Klappdeckel ausgeführt ist. Bei beiden Alternativen muß die Größe des Verschlußdeckels in etwa der Größe der Öffnung des Verbundmaterials entsprechen, um das Ausgießelement von der Packungsinnenseite her in die Öffnung einsetzen zu können.

Bei der erstgenannten Variante des Verschlußdeckels weisen sowohl Verschlußdeckel als auch Ausgießelement korrespondierende Führungsschienen auf und sind Rastelemente zum Arretieren des Verschlußdeckels in den Endstellungen "offen" und "verschlossen" vorgesehen. Auf diese Weise wird zuverlässig vermieden, daß während des Eingießens der in offener Stellung befindliche Verschlußdeckel aufgrund seines Eigengewichts in Richtung der verschlossenen Stellung gleitet und so das Eingießen erschwert oder verhindert. Erfindungsgemäß kann dabei zur Verbesserung der Handhabbarkeit der Verschlußdeckel auf seiner Oberseite Erhebungen und/oder Vertiefungen aufweisen, um die Reibung zwischen Verschlußdeckel und dem Betätigungsfinger zu erhöhen.

Als besonders zweckmäßig hat es sich erwiesen, daß bei der erfindungsgemäßen Flachgiebelverbundpackung der umlaufende Flansch des Ausgießelementes auf der dem Verbundmaterial zugewandten Seite Vorsprünge aufweist, die das für eine dichte Verbindung benötigte Kunststoffmaterial zur Verfügung stellen. Diese Vorsprünge können in weiterer Ausgestaltung der Erfindung als auf dem Flansch umlaufende und sich zum Verbundmaterial zuspitzende Leisten ausgebildet sein.

Bezüglich des Verfahrens zum Herstellen einer solchen quaderförmigen Flachgiebelverbundpackung besteht die Lösung der Aufgabe durch die folgenden Schritte:
- Rillen des Mehrschichtverbundes,
- Herstellen einer Öffnung zur Aufnahme des Ausgießelementes im Giebelbereich der späteren Packungen,
- Ablängen des Zuschnittes,
- Vorfalten eines Packungszuschnittes,
- Siegeln der Langsnähte zu einem schlauchartigen Packungsmantel,
- rechteckige Ausformung des Zuschnittes und Aufschieben auf einen Dorn mit rechteckigem Querschnitt,
- Aktivierung des Bodenbereiches der Packung,
- Faltung und Versiegelung des Packungsbodens,
- Einsetzen des Ausgießelementes in die Öffnung im Packungsgiebel von der Packungsinnenseite her, bis ein umlaufender Flansch des Ausgießelementes mit dem Verbundmaterial in Kontakt tritt vor oder nach dem Abstreifen der Packung vom Dorn,
- Verbinden von Ausgießelement und Packung,
- Sterilisation der Packung,
- Faltung und Siegelung des Packungsgiebels nach dem Befüllen der Packung.

In weiterer Ausgestaltung der Erfindung ist vorgesehen, daß das Verbinden von Ausgießelement und Packung mittels Ultraschallschweißen erfolgt. Diese Art der Verbindung von Ausgießelement und Verbundmaterial läßt sich mit geringem konstruktiven Aufwand durchführen und gewährleistet eine zuverlässig dichte Verbindung, da die offenen Kanten des Verbundmaterial im Bereich der Öffnung im Verbundmaterial vom Flansch des Ausgießelementes zuverlässig abgedichtet werden, so daß die Flüssigkeit nicht in Berührung mit diesen Kanten treten kann.

Es ist klar, daß erfindungsgemäß die Bauhöhe der Flachgiebelverbundpackung gegenüber dem Stand der Technik deutlich verringert wird, da vom Ausgießelement nur noch ein sehr geringer Teil über den Packungsgiebel hervorsteht und die Befestigung des Ausgießelementes nicht mehr von der Packungsaußenseite, sondern von der Packungsinnenseite her erfolgt. Des weiteren ist zuverlässig ausgeschlossen, daß die oben geschilderten Probleme beim Ausgießvorgang auftreten können, da der Packungsverbundteil aus der Ausgießöffnung bereits beim Herstellvorgang der Flachgiebelverbundpackung entfernt worden ist.

Die Erfindung wird nachfolgend anhand einer lediglich ein Ausführungsbeispiel darstellenden Zeichnung näher erläutert. In der Zeichnung zeigen
- Fig. 1: eine erfindungsgemäße quaderförmige Flachgiebelverbundpackung in perspektivischer Darstellung,
- Fig. 1a: das Ausgießelement aus Fig. 1 ohne Flachgiebelverbundpackung in perspektivischer Darstellung,
- Fig. 2: einen Vertikalschnitt entlang der Linie II-II aus Fig. 1, und
- Fig. 3: den Gegenstand aus Fig. 2 während des Herstellvorganges kurz vor dem Verbinden von Ausgießelement und Verbundmaterial.

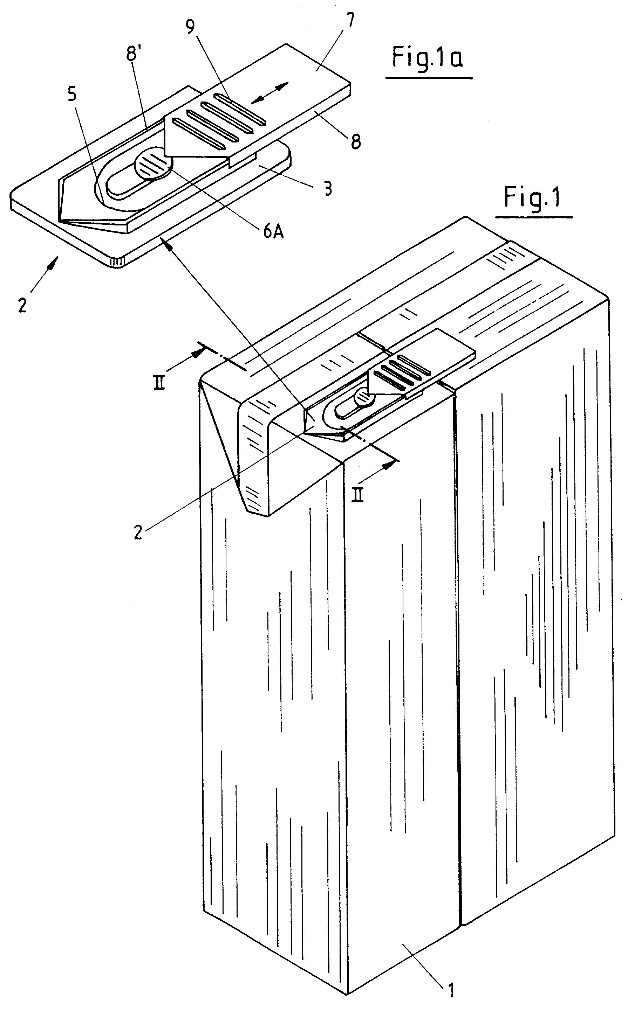

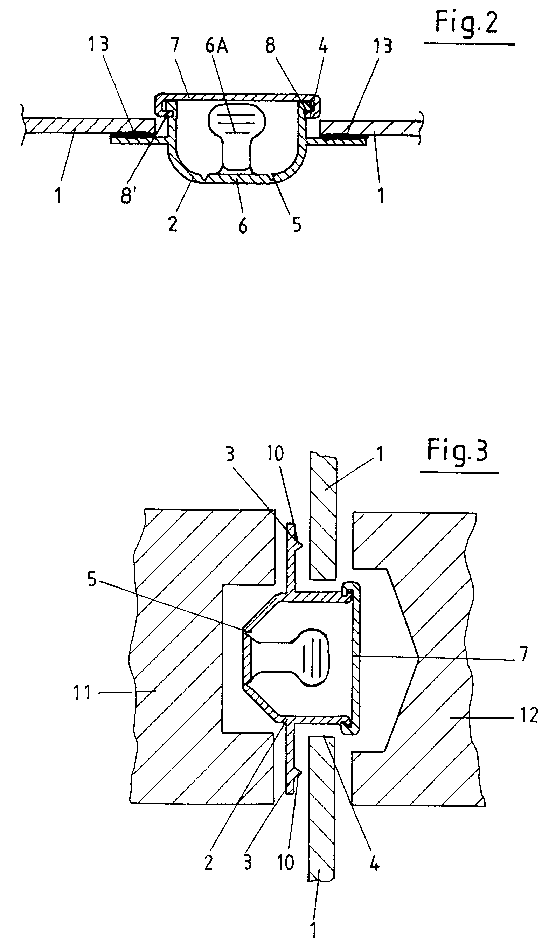

In Fig. 1 ist ein bevorzugtes Ausführungsbeispiel einer erfindungsgemäß hergestellten Flachgiebelverbundpackung 1 in perspektivischer Darstellung dargestellt. Dabei handelt es sich beim dargestellten Ausführungsbeispiel um eine Ohrenpackung mit Mittelnaht. Auf dem Packungsgiebel der Flachgiebelverbundpackung 1 befindet sich ein Ausgießelement 2, welches in Fig. 1a zur besseren Übersicht noch einmal vergrößert und einzeln dargestellt ist. Das Ausgießelement 2 verfügt über einen umlaufenden Flansch 3, dessen Oberseite mit der inneren Packungsoberseite der Flachgiebelverbundpackung 1 verbunden ist. Die genaue Anordnung des Ausgießelementes 2 in einer entsprechenden Öffnung 4 des Verbundmaterials der Flachgiebelverbundpackung 1 ist Fig. 2 zu entnehmen. Das in der Öffnung 4 angeordnete Ausgießelement 2 weist in seinem Inneren eine umlaufende Schwächungslinie 5 und innerhalb der Schwächungslinie 5 eine Öffnungshilfe 6A zum Herausziehen des von der Schwächungslinie 5 umgebenden Verschlußteiles 6 des Ausgießelementes 2 auf. Die Schwächungslinie 5 ist besonders deutlich im Querschnitt aus Fig. 2 zu erkennen.

Im dargestellten und insoweit bevorzugten Ausführungsbeispiel weist das Ausgießelement 2 einen wiederverschließbaren Verschlußdeckel 7 auf, welcher auf dem Ausgießelement 2 verschiebbar angeordnet ist. Die Verbindung von Verschlußdeckel 7 und Ausgießelement 2 erfolgt aber über korrespondierende Führungsschienen 8, 8'. Nicht dargestellt ist, daß der Verschlußdeckel 7 und/oder das Ausgießelement 2 Rastelemente zum Arretieren des Verschlußdeckels in den Endstellungen "offen" und "verschlossen" aufweisen.

Eine Riffelung 9 auf der Oberseite des Verschlußdeckels 7 dient zur Verbesserung der Handhabbarkeit des Verschlußdeckels 7, in dem die Angriffsfläche vergrößert wird. Im dargestellten und insoweit bevorzugten Ausführungsbeispiel weist der umlaufende Flansch 3 des Ausgießelementes 2 auf der dem Verbundmaterial der Flachgiebelverbundpackung 1 zugewandten Seite eine umlaufende und sich zum Verbundmaterial zuspitzende Leiste 10 auf. Zur besseren Darstellung der Leiste 10 ist das Verbundmaterial 1 auf der linken Seite von Fig. 2 teilweise nur strichpunktiert dargestellt.

Schließlich ist in Fig. 3 der Verbindungsvorgang zwischen Flachgiebelverbundpackung 1 und Ausgießelement 2 dargestellt. Die auf dem Packungsboden stehende Flachgiebelverbundpackung 1 ist auf ihrer Oberseite beim Verbindungsvorgang noch nicht verschlossen, so daß das Verbundmaterial des Packungsgiebels noch senkrecht steht. Ein Amboß 11, welcher gleichzeitig zum Halten des Ausgießelementes 2 dienen kann, setzt das Ausgießelement 2 in die Öffnung 4 der Flachgiebelverbundackung 1 ein bis der umlaufende Flansch 3 in direktem Kontakt mit dem Verbundmaterial der Flachgiebelverbundpackung 1 tritt. Zur Verbesserung dieses Kontaktes und zum Vermeiden einer Relativbewegung zwischen Ausgießelement 2 und dem die Öffnung 4 umgebenden Verbundmaterial in der Ebene der Öffnung 4 ist der umlaufende Flansch 3 mit der bereits beschriebenen umlaufenden Leiste 10 versehen. Von der anderen Seite des Verbundmaterials nähert sich nun eine in ihrer Größe dem Amboß 11 entsprechende Sonotrode 12, welche in Verbindung mit dem Amboß 11 das Verbundmaterial und das Ausgießelement 2 Zusammenpreßt und gleichzeitig die Ultraschallverschweißung vornimmt. Auf diese Weise ist eine sichere und dichte Verbindung von Ausgießelement 2 und Verbundmaterial im Bereich der Schweißnaht 13 der Flachgiebelverbundpackung 1 hergestellt.

## Patentansprüche

1. Quaderförmige Flachgiebelverbundpackung, insbesondere Ohrenpackung mit Mittel- oder Ecknaht, mit einem Ausgießelement,
**dadurch gekennzeichnet**, daß das Ausgießelement (2) einen umlaufenden Flansch (3) aufweist, der an der Packungsinnenseite anliegt, daß im Packungsgiebel eine Öffnung (4), zur Aufnahme des Ausgießelementes (2) vorgesehen ist, daß das in der Öffnung (4) angeordnete Ausgießelement (2) in seinem Inneren eine umlaufende Schwächungslinie (5) aufweist und daß das Ausgießelement (2) innerhalb der Schwächungslinie (5) ein Verschlußteil (6) mit einer daran einstückig angelenkten Öffnungshilfe (6A) zum Herausziehen des von der Schwächungslinie (5) umgebenen Verschlußteiles (6) des Ausgießelementes (2) aufweist.

2. Flachgiebelverbundpackung nach Anspruch 1,
**dadurch gekennzeichnet**, daß das Ausgießelement die gleichen Barriereeigenschaften hinsichtlich Dichtigkeit, Sauerstoffsperre etc. wie das verwendete Verbundmaterial aufweist.

3. Flachgiebelverbundpackung nach Anspruch 1 oder 2,
**dadurch gekennzeichnet**, daß das Ausgießelement (2) einen wiederverschließbaren Verschlußdeckel (7) aufweist.

4. Flachgiebelverbundpackung nach Anspruch 3,
**dadurch gekennzeichnet**, daß der Verschlußdeckel (7) auf dem Ausgießelement (2) verschiebbar angeordnet ist.

5. Flachgiebelverbundpackung nach Anspruch 4,
**dadurch gekennzeichnet**, daß der Verschlußdeckel (7) und das Ausgießelement (2) korrespondierende Führungsschienen (8, 8') aufweisen und daß Rastelemente zum Arretieren des Verschlußdeckels (7) in den Endstellungen "offen" und "verschlossen" vorgesehen sind.

6. Flachgiebelverbundpackung nach Anspruch 4 oder 5,
**dadurch gekennzeichnet**, daß der Verschlußdeckel (7) auf einer Oberseite Erhebungen (9) und/oder Vertiefungen zur Verbesserung der Handhabbarkeit aufweist.

7. Flachgiebelverbundpackung nach Anspruch 3,
**dadurch gekennzeichnet**, daß der Verschlußdeckel als einstückig mit dem Ausgießelement verbundener Klappdeckel ausgeführt ist.

8. Flachgiebelverbundpackung nach einem der Ansprüche 1 bis 7,
**dadurch gekennzeichnet**, daß der umlaufende Flansch (3) des Ausgießelementes (2) auf der dem Verbundmaterial zugewandten Seite Vorsprünge aufweist.

9. Flachgiebelverbundpackung nach Anspruch 8,
**dadurch gekennzeichnet**, daß die Vorsprünge als wenigstens eine auf dem Flansch umlaufende und sich zum Verbundmaterial zuspitzende Leiste (10) ausgebildet sind.

10. Verfahren zum Herstellen einer quaderförmigen Flachgiebelverbundpackung, insbesondere Ohrenpackung mit Mittel- oder Ecknaht, mit einem Ausgießelement nach einem der Ansprüche 1 bis 9,
**gekennzeichnet durch** die folgenden Schritte:
- Rillen des Mehrschichtverbundes,
- Herstellen einer Öffnung zur Aufnahme des Ausgießelementes im Giebelbereich der späteren Packungen,
- Ablängen des Zuschnittes,
- Vorfalten eines Packungszuschnittes,
- Siegeln der Längsnähte zu einem schlauchartigen Packungsmantel,
- rechteckige Ausformung des Zuschnittes und Aufschieben auf einen Dorn mit rechteckigem Querschnitt,
- Aktivierung des Bodenbereiches der Packung,
- Faltung und Versiegelung des Packungsbodens,
- Einsetzen des Ausgießelementes in die Öffnung im Packungsgiebel von der Packungsinnenseite her, bis ein umlaufender Flansch des Ausgießelementes mit dem Verbundmaterial in Kontakt tritt vor oder nach dem Abstreifen der Packung vom Dorn,
- Verbinden von Ausgießelement und Packung,
- Sterilisation der Packung,
- Faltung und Siegelung des Packungsgiebels nach dem Befüllen der Packung.

11. Verfahren nach Anspruch 10,
**dadurch gekennzeichnet**, daß das Verbinden von Ausgießelement und Packung mittels Ultraschallschweißen erfolgt.

## Claims

1. A parallelepipedical flat-gable-top container, in particular a container with a middle seam or corner seam, comprising a pouring spout, characterised in that the pouring spout (2) comprises a surrounding flange (3) closely fitting the interior of the package; in that in the container gable an aperture (4) for receiving the pouring spout (2) is provided; in that the interior of the pouring spout (2) arranged in the aperture (4) comprises a weakening line (5); and in that the pouring spout (2) within the weakening line (5) comprises a sealing part (6) with an opening aid (6A) hinged in one piece to said sealing part (6), for pulling out the sealing part (6), surrounded by the weakening line (5), of the pouring spout (2).

2. A flat-gable-top container according to claim 1, characterised in that the pouring spout has the same barrier characteristics in relation to tightness, effectiveness as an oxygen barrier etc. as the composite material used.

3. A flat-gable-top container according to claim 1 or 2, characterised in that the pouring spout (2) comprises a re-closeable sealing cap (7).

4. A flat-gable-top container according to claim 3, characterised in that the sealing cap (7) is slidably arranged on the pouring spout (2).

5. A flat-gable-top container according to claim 4, characterised in that the sealing cap (7) and the pouring spout (2) comprise corresponding guide rails (8, 8') and that snap-on elements are provided for arresting the sealing cap (7) in the terminal positions "open" and "closed".

6. A flat-gable-top container according to claim 4 or 5, characterised in that the sealing cap (7) on its upper surface comprises raised parts (9) and/or indented parts for improved handling.

7. A flat-gable-top container according to claim 3, characterised in that the sealing cap is made as a hingeable cap connected in one piece to the pouring spout.

8. A flat-gable-top container according to one of claims 1 to 7, characterised in that the surrounding flange (3) of the pouring spout (2) comprises projecting parts on the side facing the composite material.

9. A flat-gable-top container according to claim 8, characterised in that the projecting parts are configured as at least one ledge (10) surrounding the flange, said ledge being tapered towards the composite material.

10. A method for producing a parallelepipedical flat-gable-top container, in particular a container with a middle seam or corner seam, comprising a pouring spout according to one of claims 1 to 9, characterised by the following steps:
- grooving the multilayer composite material;
- producing an aperture for receiving the pouring spout in the gable area of the container to be;
- cutting the cutout to length;
- preliminary folding of a container cutout;
- sealing the longitudinal seams to a tubular container mantle;
- rectangular shaping of the cutout and sliding it onto a mandrel of rectangular cross-section;
- activating the bottom region of the container;
- folding and sealing the bottom of the container;
- inserting the pouring spout into the aperture in the container gable from the inside of the container, until a surrounding flange of the pouring spout establishes contact with the composite material before or after sliding the container off the mandrel;
- connecting the pouring spout to the container;
- sterilising the container;
- folding and sealing the container gable after filling the container.

11. A method according to claim 10, characterised in that connection of the pouring spout to the container takes place by means of ultrasound welding.

## Revendications

1. Récipient parallélépipédique à sommet en forme de toit plat, en particulier récipient à coins rabattus avec joint de soudure central ou d'angle, pourvu d'un bec verseur, caractérisé en ce que le bec verseur (2) présente un rebord périphérique (3), qui est en appui sur la face intérieure du récipient, en ce qu'une ouverture (4) est prévue dans le sommet du récipient pour réceptionner le bec verseur (2), en ce que le bec verseur (2) placé dans l'ouverture (4) présente, dans son espace intérieur, une ligne d'affaiblissement périphérique (5), et en ce que le bec verseur (2) présente, à l'intérieur de la ligne d'affaiblissement (5), un élément d'obturation (6) pourvu d'un dispositif d'assistance à l'ouverture (6A) qui lui est articulé d'un seul tenant, pour extraire l'élément d'obturation (6) du bec verseur (2) entouré par la ligne d'affaiblissement (5).

2. Récipient à sommet en forme de toit plat selon la revendication 1, caractérisé en ce que le bec verseur (2) présente les mêmes propriétés barrières que le matériau composite mis en oeuvre, en termes d'étanchéité, barrage à l'oxygène etc.

3. Récipient à sommet en forme de toit plat selon la revendication 1 ou 2, caractérisé en ce que le bec verseur (2) présente un capuchon d'obturation (7) qui peut être refermé.

4. Récipient à sommet en forme de toit plat selon la revendication 3, caractérisé en ce que le capuchon d'obturation (7) est placé sur le bec verseur (2) de façon à pouvoir coulisser.

5. Récipient a sommet en forme de toit plat selon la revendication 4, caractérisé en ce que le capuchon d'obturation (7) et le bec verseur (2) présentent des glissières (8, 8') correspondantes et en ce que des éléments d'encliquetage sont prévus pour caler le capuchon d'obturation (7) dans les positions finales "ouvert" et "fermé".

6. Récipient à sommet en forme de toit plat selon la revendication 4 ou 5, caractérisé en ce que le capuchon d'obturation (7) présente, sur sa face supérieure, des élévations (9) et/ou des enfoncements pour améliorer la maniabilité.

7. Récipient à sommet en forme de toit plat selon la revendication 3, caractérisé en ce que le capuchon d'obturation est réalisé sous forme de capuchon rabattant raccordé d'un seul tenant au bec verseur.

8. Récipient à sommet en forme de toit plat selon l'une des revendications 1 à 7, caractérisé en ce que le rebord périphérique (3) du bec verseur (2) présente des saillies sur la face dirigée vers le matériau composite.

9. Récipient à sommet en forme de toit plat selon la revendication 8, caractérisé en ce que les saillies sont réalisées sous forme d'au moins une nervure (10) faisant le tour du rebord et s'effilant en direction du matériau composite.

10. Procédé de production d'un récipient parallélépipédique à sommet en forme de toit plat, selon l'une des revendications 1 à 9, en particulier récipient à coins rabattus avec joint de soudure central ou d'angle, pourvu d'un bec verseur, caractérisé par les opérations suivantes:
- formation de rainures dans le composite lamifié,
- réalisation d'une ouverture pour réceptionner le bec verseur dans la zone du sommet du futur récipient,
- mise à longueur de la découpe,
- pliage préliminaire d'une découpe de récipient,
- scellement des joints de soudure longitudinaux pour former une gaine de récipient du type boyau,
- formage rectangulaire de la découpe et engagement sur un mandrin de section transversale rectangulaire,
- activation de la zone du fond du récipient,
- pliage et scellement du fond du récipient,
- introduction du bec verseur dans l'ouverture ménagée dans le sommet du récipient depuis la face intérieure du récipient, jusqu'à ce qu'un rebord périphérique du bec verseur vienne en contact avec le matériau composite, avant ou après le décollement du récipient du mandrin,
- raccordement du bec verseur et du récipient,
- stérilisation du récipient,
- pliage et scellement du sommet du récipient après le remplissage de ce dernier.

11. Procédé selon la revendication 10, caractérisé en ce que le raccordement du bec verseur et du récipient se fait par soudage par ultrasons.
